# EUROPEAN PATENT SPECIFICATION

(11) **EP 3 291 687 B1**
(45) Date of publication and mention of the grant of the patent: **06.02.2019**
(21) Application number: 15804508.8
(22) Date of filing: 03.12.2015
(51) Int. Cl.: A23D 7/005, A23D 7/01

(54) **EDIBLE SPREADIBLE EMULSION COMPRISING A NATURAL COLOURING AGENT**
ESSBARE STREICHFÄHIGE EMULSION MIT EINEM NATÜRLICHEN FÄRBEMITTEL
ÉMULSION COMESTIBLE TARTINABLE COMPRENANT UN COLORANT NATUREL

(30) Priority: 22.12.2014 EP 14199659
(43) Date of publication of application: 14.03.2018
(73) Proprietor: Unilever N.V., 3013 AL Rotterdam (NL); Unilever PLC, a company registered in England and Wales under company no. 41424, London EC4Y 0DY (GB); Unilever BCS Europe B.V., 3013 AL Rotterdam (NL); Unilever BCS Limited, London, EC4Y 0DY (GB)
(72) Inventor: BEINDORFF, Christiaan, Michaël, 3133 AT Vlaardingen (NL); MIRET-CATALAN, Silvia, 3133 AT Vlaardingen (NL); EL OUAGMIRI, Mustapha, 3133 AT Vlaardingen (NL)
(74) Representative: EP&C
(86) International application number: PCT/EP2015/078534
(87) International publication number: WO 2016/102167

(56) References cited:
- WO-A1-01/08511
- JP-A- 2002 065 159
- US-A- 4 414 234
- US-A1- 2007 269 526
- US-A1- 2014 342 048

## Description

### Field of the Invention

The present invention relates to an edible spreadable emulsion product (in short a spread), which edible spreadable emulsion product comprises a natural colouring agent. More specifically, the colouring agent is an extract of white mulberry fruit, and even more specifically the amount of such extract of mulberry fruit in the emulsion is such that the spread has a beige colour. The invention further relates to a process for preparing an edible slice of bread or bread roll, which process comprises the step of spreading a slice of bread or bread roll with the emulsion product according to the present invention.

### Background of the invention

Fat continuous food products are well known in the art and include for example shortenings comprising a fat phase and water in oil emulsions like spreads and margarines comprising a fat phase and an aqueous phase. The spreads are usually intended and used for spreading on bread (slices or rolls).

The fat phase of fat-continuous emulsions is often a mixture of liquid oil (i.e. fat that is liquid at ambient temperature) and fat which is solid at ambient temperatures. The solid fat, also called structuring fat or hardstock fat, serves to structure the fat phase (being the case in for example a shortening as well as in a water in oil emulsion) and helps to stabilize the aqueous phase, if present, by forming a fat crystal network. Further ingredients in spreads can be one or more of: salt, a colouring agent, milk protein, a preservative, an emulsifier, and ingredients used for specific purposes such as thickeners.

A colouring agent is usually included in the recipe to give the spread a yellowish colour, as manufacturers usually try to mimic the colour of (dairy) butter. Spreads are usually positioned as a (more healthy) alternative to butter (due to the fatty acid profile) but so far should resemble butter as much as possible, e.g. in colour. The colouring agent usually employed for such is beta-carotene. Reasons for use of beta-carotene for such purpose are e.g. that it is food-grade, widely available, both from synthetic and natural origin, cheap, easily dissolvable in oil, does not affect emulsion stability, is tasteless, and most importantly gives the desired bleak-yellow colour reminiscent of dairy butter.

Butter, however, is not regarded as particularly healthy due to its high content in saturated fatty acids. Like other dairy products such as cream it is more regarded as an indulgence food. That may be fine for some applications, e.g. when indulgence is the aim, like when baking a cake, or for spreading on fresh baguette.

The colour of food is an important cue for some of the properties of the food concerned. For example, in the western world, the "whole grain" version of e.g. bread, pasta, rice, is generally a product having a more beige/brownish colour than the version made of refined ingredients. The more refined versions are e.g. white bread and light yellow pasta (made from refined flour), and white rice (milled rice that has had its husk, bran, and germ removed). The whole grain version is usually regarded by consumers and health experts as a more healthy option. Hence, the colour can be seen as a cue for a healthier product.

Fat spreads are traditionally made to look like butter, even though they are healthier than butter. Thus, for spreads there is not yet a more healthy colour cue, like there is e.g. for bread. Hence, there is a need for a spread which has a more beige colour (instead of the traditional butter-yellow) as a variant, as such spread variant may be more associated with more healthy than butter, like the beige or brown bread is more associated with healthy food than white bread. Thus, there is a need for more beige coloured spreads than the current butter-yellow spread, yet which beige coloured spread is easy to manufacture (preferably with as few as possible adaptations to the processing, and has a physical performance in e.g. firmness, emulsion stability, salt release, that is not too different from (preferably similar to) conventional spreads (i.e. the same overall composition yet with the conventional beta-carotene colouring agent). Ideally, the colour-intensity should be easily to manipulate, to be able to make a spread more or less intense beige coloured.

N. Akhtar et al, Hygeia J. D. Med., vol 4(1), w012, pp 97-103 describe water in oil skin creams for the use of whitening skin, which creams contain 4% of an ethanolic extract of Morus Alba (mulberry fruit extract). The oily phase is made of paraffin oil and stearic acid and an emulsifier.

X. Liu et al, J. Biomed. Biotechnol. 5 (2004), pp. 326-331, mentions the use of mulberry fruit (extract) as a natural red colorant.

Akbulut, M. and Çoklar, H., J. Food Proc. Eng. 31 (2008), pp. 488-502 discloses physicochemical and rheological properties of sesame pastes (tahin) processed from hulled and unhulled roasted sesame seeds and their blends at various levels.

US2014/0342048 discloses food composition such as spreads which may contain white mulberry fruit extract as flavouring ingredient.

JP2002-65159 discloses green water-in-oil emulsions containing mulberry leaves extract.

### Summary of the Invention

It has now been found that the objectives as set out above may be achieved, at least in part, by an edible spreadable oil-continuous emulsion product (i.e. a "spread"), which emulsion product comprises 20-85% by weight of fat or oil, 15-80% by weight of water, the amount of water and fat and oil together being at least 75% by weight, wherein the emulsion product further comprises 0.5-7.5% by weight of extract of white mulberry fruit.

The invention also relates to the use of such spread on bread. Hence, the invention further relates to a process for preparing an edible slice of bread or bread roll, which process comprises the step of spreading a slice of bread or bread roll with 2-50 g of the emulsion product ("spread") according to the present invention.

### Detailed description of the invention

The words "fat" and "oil" are used interchangeably herein. The person of average skill in the art will know that for such emulsion products to be spreadable and in order to satisfy criteria such as health, mouthfeel and appearance, at least part of the triglyceride lipid phase (the fat and oil together) needs to be solid at room temperature.

Spreads for spreading on bread are generally oil-continuous products (the exception being some very low fat products, e.g. below 20% fat). Hence, the emulsion products according to the present invention are oil-continuous.

It was found, that an extract of mulberry fruit obtained from the white mulberry tree varieties, which is a brownish powder itself, can impart a beige colour when employed in edible spreadable oil-continuous emulsions such as spreads for application on bread, and when such is done instead of the normal colouring agent beta-carotene. Surprisingly, the beige colour that can be obtained has a colour not too different from a slice of whole grain bread (that is: bread made from at least 80% whole grain wheat flour, and which does not contain further colouring agents).

Mulberry fruit extract can be obtained from the fruit of the *Morus sp* tree. *Morus sp* is widely cultivated in Asia, especially in China, where the leaves are used to feed silkworms employed in the commercial production of silk. There are white mulberry varieties (such as *Morus alba L*) which fruit remains white upon ripening, while other varieties (such as *Morus nigra L or Morus rubra L*) the fruit turns pink to dark red upon ripening. The ripe mulberry fruits are widely used in juice, beverages, wine, jams, pies and tarts in many countries, such as China, Japan and India. Dried mulberry fruit has been used as a traditional Chinese medicine for more than 2000 years, and its uses are shown in the Chinese Pharmacopeia. Mulberry fruit is also mentioned in the Ayuverdic Materia Medica. When it is herein referred to as "mulberry fruit extract" it is referred to an extract of the fruits of the mulberry of the variant with white fruits (i.e. extract of white mulberry fruit).

It was surprisingly also found that the use of mulberry fruit extract from white mulberry tree varieties such as *Morus alba L* (extract of white mulberry fruit) as a colouring agent to provide a beige colour to the spreadable emulsion product does not affect usual processing of making such spreads, other than that the usual beta-carotene is dissolved in the oil phase, whereas the mulberry fruit extract used is water soluble, and thus is added as part of the aqueous phase. It was also found that properties (other than the colour) of the spreads so produced do not substantially change. In other words, emulsion stability, salt release, and firmness are not substantially affected by the exchange in the recipe of beta carotene for mulberry fruit extract.

Depending on the exact nature of the extract of white mulberry fruit and the degree of colouring (light beige or dark beige, or anything in between) it may be preferred that in the emulsion product according to the present invention comprises extract of white mulberry fruit in an amount of from 0.8 to 6% by weight on the total emulsion product, or more preferably from 1 to 5% by weight on the total emulsion product. Regarding the amounts of the extract of white mulberry fruit, it is to be understood such refers to the weight of a dried extract of white mulberry fruit. Hence, regarding the amount, the weight % of extract of white mulberry fruit refers to the weight of dried extract of white mulberry fruit on weight of emulsion product, expressed as a percentage.

Extract of white mulberry fruit as is commercially available is generally water-soluble. This also facilitates incorporation of the extract of white mulberry fruit in the emulsion product, as it can be simply dissolved in the aqueous phase of the emulsion. If a commercially available extract of white mulberry fruit is not fully water soluble, or it is not entirely clear it is water soluble, it can be treated e.g. by mixing with water, heating it up and stirring for some time, filtering off any solid non-soluble residue, and drying the supernatant to the required concentration (which may be dry) to be used in the aqueous phase of the emulsion product desired. Thus, in the product according to the present invention, it is preferred that the extract of white mulberry fruit is a water-soluble extract of white mulberry fruit.

The extract of white mulberry fruit as used in the present invention may suitably be obtained as follows: dried white mulberry fruit is sliced, extracted with water, filtered and concentrated, and finally dried (e.g. by spray-drying) into fine powder. No excipient needs to be used during such spray-drying process, resulting in a final product with a dried white mulberry fruit to extract ratio of e.g. 10:1. The ratio of fresh fruit to extract is e.g. 33:1 (calculated figure based on the water content of the fruit and the extraction process). Hence, in the present invention, the extract of white mulberry fruit is a dried aqueous extract of white mulberry fruit, preferably a dried aqueous extract of dried white mulberry fruit.

The spreads used e.g. for application on bread (e.g. whole grain bread) preferably comprise from 30 to 85% by weight of fat or oil and from 15 to 70% by weight of water.

More preferably the product of the present invention comprises from 35% to 55% by weight of fat or oil and from 45 to 65% by weight of water. The total amount of fat, oil, and water is preferably at least 85% by weight of the total emulsion product, preferably it is at least 90% by weight of the emulsion product. The fat and oil fraction in the present invention preferably comprises at least 70% vegetable fat and oil, more preferably it comprise at least 80% vegetable fat and oil, as such is generally regarded as healthier than fats and oils predominantly of e.g. dairy fat.

The emulsion product according to the present invention may comprise other ingredients than fat, oil, water, and extract of white mulberry fruit. Depending on the taste preference, the emulsion product preferably comprises 0.1-1.5% by weight of edible salt (i.e. NaCl and/or KCI). Depending on e.g. the desired fat level, the desired stability and salt release, the formulations according to the present invention may further comprise emulsifiers. Hence, the emulsion product according to the present invention may further comprise a mono acyl glyceride emulsifier and/or lecithin. An ingredient that also may be present is sorbate.

As mentioned, the emulsion product ("spread") according to the present invention has properties not very different from spreads of the same processing and same composition (apart from the different colouring agent).

Properties like the Stevens value (which is an indication of firmness), spreadability, droplet size (as expressed by a D3,3), salt release, emulsion stability are measured for spreads of the invention according to the following protocols.

### Stevens value

A product, whereof the Stevens-value is to be measured is stabilized at 5 degrees Celsius. The hardness of the product is measured with a Stevens penetrometer (Brookfield LFRA Texture Analyser (LFRA 1500), ex Brookfield Engineering Labs, UK) equipped with a stainless steel probe with a diameter of 6.35 mm and operated in "normal" mode. The probe is pushed into the product at a speed of 2 mm/s, a trigger force of 5 gram from a distance of 10 mm. The force required is read from the digital display and is expressed in grams.

Preferably the emulsion according to the invention has a Stevens-value of between 50 and 350, more below 300, even more preferably below 250, yet even more preferably below 220, most preferably below 200. It is preferred that the Stevens value of the spreads according to the present invention have a Stevens value of from 80 to 250, more preferably from 90 to 220, even more preferably 100 to 200 and still even more preferably of from 120 to 200. The values in this are measured after cycling.

### Water droplet size

The normal terminology for Nuclear Magnetic Resonance (NMR) is used throughout this method. On the basis of this method the parameters D3,3 and exp(σ) of a lognormal water droplet size distribution can be determined. The D3,3 is the volume weighted mean droplet diameter and σ (e-sigma) is the standard deviation of the logarithm of the droplet diameter.

The NMR signal (echo height) of the protons of the water in a water -in-oil emulsion are measured using a sequence of 4 radio frequency pulses in the presence (echo height E) and absence (echo height E*) of two magnetic field gradient pulses as a function of the gradient power. The oil protons are suppressed in the first part of the sequence by a relaxation filter. The ratio (R=E/E*) reflects the extent of restriction of the translational mobility of the water molecules in the water droplets and thereby is a measure of the water droplet size. By a mathematical procedure -which uses the lognormal droplet size distribution - the parameters of the water droplet size distribution D3,3 (volume weighed geometric mean diameter) and σ (distribution width) are calculated.

A Bruker magnet with a field of 0.47 Tesla (20 MHz proton frequency) with an air gap of 25 mm is used (NMR Spectrometer Bruker Minispec MQ20 Grad, ex Bruker Optik GmbH, DE).

The droplet size of the spread is measured, according to the above described procedure, of a spread stabilized at 5 degrees Celsius right after production for one week. This gives the D3,3 after stabilization at 5 degrees Celsius.

Preferably the emulsion according to the invention has water droplet size distribution with a D3,3 below 12, more preferably from 12 to 3, even more preferably from 8 to 3, yet even more preferably from to 6 to 3.2 and most preferably from 4.5 to 3.5.

Preferably the emulsion according to the invention has water droplet size distribution with an e-sigma of at most 3, more preferably at most 2.5, yet more preferably of at most 2.3, even more preferably of at most 1.8 and most preferably of at most 1.4.

Preferably, the products according to the present invention have no free water.

### Spreadability

A flexible palette knife is used to spread a small amount of the spread on to fat free paper. The spreading screen is evaluated according to standardized scaling. A score of 1 represents a homogeneous and smooth product without any defects, a 2 refers to the same product but then with small remarks as slightly inhomogeneous or some vacuoles, a 3 refers to the level where defects become almost unacceptable, like loose moisture or coarseness during spreading. A score of 4 or 5 refers to unacceptable products, where the 4 refers to a product still having some spreading properties, but an unacceptable level of defects.

The invention further relates to the use of the emulsion products according to the present invention for spreading on bread. Hence, the invention further relates to a process for preparing an edible slice of bread or bread roll, which process comprises the step of spreading a slice of bread or bread roll with 2-50 g (more preferably 4-30 g) of the emulsion product according to the present invention.

It will be understood that the product with the cue of the colour of healthy food is preferably spreaded on whole grain bread. Hence, in the present invention it is preferred that the slice of bread or bread roll in the above is made of flour comprising at least 50% (by weight based on the total amount of flour) of whole grain flour. More preferably, in such, the slice of bread or bread roll is made of a flour comprising at least 50% of flour made from wheat, barley, rye, corn, or a mixture thereof.

### EXAMPLES

A commercially available dry extract of dried white mulberry fruit was purified and mixed with a conventional fat spread (39% fat), at five different concentrations of said mulberry fruit extract (MFE).

### Composition of the spread:

- 4.68 wt% enzymatically inter-esterified fat blend of palm oil stearine fraction and palm kernel stearine fraction (as fat powder, to provide structuring).
- 34.1 wt% sunflower oil
- 0.20 wt% Dimodan HP (saturated monoglyceride)
- Variable amounts of demineralised water (the balance)
- 0.10 wt% of sodium chloride
- 0.050 wt% potassium sorbate
- Variable amounts of freeze dried mulberry fruit extract (MFE): from 0.75% by weight on the spread to 3.75% by weight.

The pH was adjusted with a 20 wt% sodium hydroxide solution to a value of 4.8.

### Purification of the dried extract of white mulberry fruit

Mulberry extract powder was supplied by Dracon Natural Products, USA.

Of the above powder, 4.1% mulberry fruit extract powder was dissolved in demi water at 40± 5 °C and stirred continuously for 1 hour using a "paint" mixer. After removing insoluble MFE ingredients by centrifugation in centrifuge : Sigma 8K from Sigma, 1.5 liters bucket in swing-out rotor, max 5100 rpm (=8578 xg), for 45 minutes. The pellet (insoluble material) was discarded, and the supernatant was collected and pooled, then immediately freeze dried, for storage.

### Preparation of the aqueous phase

- 1.84 kilogram (3.75 wt%) of freeze dried white mulberry fruit extract powder (MFE) was added, carefully in small portions, under vigorous stirring with an ultra turrax to 28.1 litres of hot (approximately 70°C) demineralised water. All the MFE powder dissolved and a dark brown coloured solution was obtained.
- 49 gram of sodium chloride (0.1 wt%) and 25 gram of potassium sorbate (0.05 wt%) were added, also under vigorous stirring with an ultra turrax, to the MFE solution.
- The solution of MFE was transferred into a run tank which was equipped with a stirring device and a heating/cooling mantel.
- The temperature of the MFE solution was raised to 72°C and kept for five minutes at this temperature to pasteurize the solution.
- The hot MFE solution was cooled down to 60°C before measuring the pH.
- The pH was measured and a start pH value was obtained of 3.8. The pH was increased with a 20 wt% sodium hydroxide solution to pH 4.8. Approximately 440 ml of the lye solution was necessary for this.
- The MFE solution was kept during the whole experiment at 60°C. When dilution was necessary it was performed with hot demineralised water (approximately 50°C).

### Preparation of the fat powder

Micronized fat powder was obtained using a supercritical melt micronisation process similar to the process described in Particle formation of ductile materials using the PGSS technology with supercritical carbon dioxide, P.Münüklü, Ph.D.Thesis, Delft University of Technology, 16-12-2005, Chapter 4, pp. 41-51. The fat powder consisted of an interesterified mixture of 65% dry fractionated palm oil stearin with an Iodine Value of 14 and 35% palm kernel oil. The melting point of the fat was 48°C.

### Preparation of the fat slurry of fat powder and oil

In a closed, pressurisable tank equipped with:
- an anchor stirrer,
- a high shear disk mixer,
- a recirculation loop containing an in-line dynamic mixer and
- a cooling mantle
100 kg of a fat slurry was produced as described below.

The fat slurry was prepared by sucking 87.5 kg of sunflower oil to the tank. The cooling mantle of the tank was switched on and the sunflower oil was cooled to the desired temperature of about 11 °C under constant stirring (12 rpm) of the anchor stirrer. A diluted saturated monoglyceride solution in sunflower oil was prepared by melting 0.51 kg of Dimodan HP in 4.0 kg of warm sunflower oil (temperature 70°C). The diluted monoglyceride solution was carefully added, under constant circulation (70%) and mixing of the dynamic mixer (3000 rpm) for 7 minutes.

12.0 kg of the micronised fat powder was sucked in at an absolute pressure of 500 mbar in the vessel. To remove any incorporated carbon dioxide gas from the super critical melt micronised fat powder the absolute pressure stepwise lowered from 500 mbar to 100 mbar under continuous mixing. After the treatment all mixers were stopped and the tank was taken to ambient pressure. The tank was emptied via a bottom drain and pumped into a tank.

### Spreads manufacturing

- The aqueous phase as prepared above (at a temperature of about 60°C) was cooled down in a tubular heat exchanger to approximately 4°C.
- The aqueous phase and the fat slurry were mixed just before entering a pinstirrer (volume 1.5 litres).
- The speed of the pinstirrer was varied to obtain a spread with a water droplet size distribution (D_{3.3}) of approximately 5 µm and no or little free water (WATOR score maximum 2). The appropriate speed of the pinstirrer was 1750 rpm.
- The prepared spread was collected after the pinstirrer in plastic Euro tubs (250 ml volume)
- The tubs were stored in the dark at a temperature of 5°C.

### Analysis

Directly after processing samples of the prepared spread were taken for the following analysis:
- Water droplet size distribution (D_{3.3} and E^sigma),
- Stevens hardness (6.35 mm probe) at 5°C,
- Solids (NMR),
- Free water (WATOR paper),
- Moisture content,
- Colour measurement (Hunterlab LabScan XE colorimeter).

The Stevens value, water droplet size and distribution were determined using the methods as described in the section Detailed Description of the invention.

### Results

The results of above measurements are set out below in table 1.

The spreads were visually evaluated on colour, which varied from light beige (for the lowest concentration of MFE) to dark beige (for the highest concentration of MFE used). The colours were also measured to quantify them in the Lab-colour space.

**Table 1: analytical results of 39% fat spreads containing varying amounts of white mulberry fruit extract.**

| **Amount of MFE** | **[wt%]** | **3.75** | **2.50** | **1.68** | **1.12** | **0.75** |
|---|---|---|---|---|---|---|
| **Directly after processing** | | | | | | |
| Free water (WATOR paper) | | 0 | 0 | 2 | 1 | 0 |
| Watercontent | [wt%] | 57.7 | 55.8 | 59.2 | 59.6 | 58.2 |
| Stevens value | [g] | 23 | 20 | 26 | 25 | 26 |
| D_{3.3} | [µm] | 4.59 | 3.85 | 4.12 | 3.80 | 3.15 |
| e^Sigma | | 1.65 | 1.68 | 1.68 | 1.73 | 1.53 |
| 2.5% | | 1.72 | 1.40 | 1.50 | 1.29 | 1.37 |
| 97.5% | | 11.71 | 10.62 | 11.34 | 11.18 | 7.24 |
| Solids | [%] | 2.8 | 2.7 | 2.3 | 2.4 | 2.9 |

| **After 1 day storage at 5°C** | | | | | | |
|---|---|---|---|---|---|---|
| **Stevens value** | [g] | 90 | 96 | 102 | 106 | 96 |
| D_{3.3} | [µm] | 4.63 | 4.35 | 3.65 | 4.71 | 3.18 |
| e^Sigma | | 1.58 | 1.39 | 1.62 | 1.90 | 1.40 |
| 2.5% | | 1.90 | 2.27 | 1.43 | 1.40 | 1.63 |
| 97.5% | | 11.27 | 8.33 | 9.36 | 15.81 | 6.21 |

| **After 1 week storage at 5°C** | | | | | | |
|---|---|---|---|---|---|---|
| Stevens value | | 120 | 115 | 114 | 136 | 125 |
| D_{3.3} | [µ]m | 4.44 | 3.89 | 3.98 | 3.94 | 3.36 |
| e^Sigma | | 1.75 | 1.64 | 1.66 | 1.53 | 1.52 |
| 2.5% | | 1.49 | 1.48 | 1.47 | 1.71 | 1.48 |
| 97.5% | | 13.24 | 10.20 | 10.80 | 9.07 | 7.63 |

| **Colour measurement*** | | | | | | |
|---|---|---|---|---|---|---|
| L* | | 75.94 | 78.79 | 80.54 | 83.05 | 86.07 |
| a* | | 3.42 | 2.89 | 2.54 | 2.06 | 1.52 |
| b* | | 19.04 | 17.32 | 16.12 | 14.33 | 12.37 |

| | | | | | | |
|---|---|---|---|---|---|---|
| * Measured with a Hunterlab LabScan XE colorimeter. | | | | | | |

## Claims

1. Edible spreadable oil-continuous emulsion product, which emulsion product comprises 20-85% by weight of fat or oil, 15-80% by weight of water, the amount of water and fat and oil together being at least 75% by weight, wherein the emulsion product further comprises 0.5-7.5% by weight of extract of white mulberry fruit.

2. Emulsion product according to claim 1, wherein the emulsion product according to the present invention comprises extract of white mulberry fruit in an amount of from 0.8 to 6% by weight on the total emulsion product.

3. Emulsion product according to claim 1 or 2, wherein the emulsion product according to the present invention comprises extract of white mulberry fruit in an amount of from 1 to 5% by weight on the total emulsion product.

4. Emulsion product according to any one of claim 1 to 3, wherein the extract of white mulberry fruit is a dried aqueous extract of white mulberry fruit, preferably a dried aqueous extract of dried white mulberry fruit.

5. Emulsion product according to any of the preceding claims, wherein the extract of white mulberry fruit is a water-soluble extract of white mulberry fruit.

6. Emulsion product according to any of the preceding claims, wherein the spread has Stevens value of between 50 and 350.

7. Emulsion product according to any of the preceding claims, which emulsion product comprises from 30 to 85% by weight of fat or oil and from 15 to 70% by weight of water, more preferably from 35% to 55% by weight of fat or oil and from 45% to 65% of water.

8. Emulsion product according to any of the preceding claims, which further comprises 0.1-1.5% by weight of salt.

9. Emulsion product according to any of the preceding claims which further comprises a mono acyl glyceride emulsifier and/or lecithin.

10. Process for preparing an edible slice of bread or bread roll, which process comprises the step of spreading a slice of bread or bread roll with 2-50 g of the emulsion product according to any of claims 1 to 9.

11. Process according to claim 10, wherein the slice of bread or bread roll is made of flour comprising at least 50% (by weight based on the total amount of flour) of whole grain flour.

12. Process according to claim 10 or 11, wherein the slice of bread or bread roll is made of a flour comprising at least 50% of flour made from wheat, barley, rye, corn, or a mixture thereof.

13. Use of the emulsion product according to any of claims 1 to 9, for spreading on bread.

## Patentansprüche

1. Essbares, streichfähiges, ölkontinuierliches Emulsionsprodukt, wobei das Emulsionsprodukt 20-85 Gewicht-% Fett oder Öl, 15-80 Gewicht-% Wasser, wobei die Menge an Wasser und Fett und Öl zusammen mindestens 75 Gewicht-% beträgt, umfasst, worin das Emulsionsprodukt ferner 05-75 Gewicht-% Extrakt aus weißen Maulbeerfrüchten umfasst.

2. Emulsionsprodukt nach Anspruch 1, worin das Emulsionsprodukt gemäß der vorliegenden Erfindung Extrakt aus weißer Maulbeerfrucht in einer Menge von 0,8 bis 6 Gewicht-% des gesamten Emulsionsprodukts umfasst.

3. Emulsionsprodukt nach Anspruch 1 oder 2, worin das Emulsionsprodukt gemäß der vorliegenden Erfindung Extrakt aus weißer Maulbeerfrucht in einer Menge von 1 bis 5 Gewicht-% des gesamten Emulsionsprodukts umfasst.

4. Emulsionsprodukt nach einem der Ansprüche 1 bis 3, worin der Extrakt aus weißer Maulbeerfrucht ein getrockneter wässriger Extrakt aus weißer Maulbeerfrucht ist, vorzugsweise ein getrockneter wässriger Extrakt aus getrockneter weißer Maulbeerfrucht.

5. Emulsionsprodukt nach einem der vorangegangenen Ansprüche, worin der Extrakt aus weißer Maulbeerfrucht ein wasserlöslicher Extrakt aus weißer Maulbeerfrucht ist.

6. Emulsionsprodukt nach einem der vorangegangenen Ansprüche, worin der Aufstrich einen Stevens-Wert zwischen 50 und 350 aufweist.

7. Emulsionsprodukt nach einem der vorangegangenen Ansprüche, wobei das Emulsionsprodukt 30 bis 85 Gewicht-% Fett oder Öl und 15 bis 70 Gewicht-% Wasser, vorzugsweise aber 35 bis 55 Gewicht-% Fett oder Öl und 45 bis 65 Gewicht-% Wasser umfasst.

8. Emulsionsprodukt nach einem der vorangegangenen Ansprüche, das ferner 0,1-1,5 Gewicht-% Salz umfasst.

9. Emulsionsprodukt nach einem der vorangegangenen Ansprüche, das ferner einen Monoacylglycerid-Emulgator und/oder Lecithin umfasst.

10. Verfahren zur Herstellung einer essbaren Scheibe Brot oder eines Brötchens, wobei das Verfahren den Schritt des Bestreichens einer Scheibe Brot oder des Brötchen mit 2-50 g des Emulsionsprodukts nach einem der Ansprüche 1 bis 9 umfasst.

11. Verfahren nach Anspruch 10, worin die Scheibe Brot oder das Brötchen aus Mehl hergestellt wird, das mindestens 50 Gewicht-% Vollkornmehl (bezogen auf die Gesamtmenge an Mehl) umfasst.

12. Verfahren nach Anspruch 10 oder 11, worin die Scheibe Brot oder das Brötchen aus einem Mehl hergestellt wird, das mindestens 50% Mehl aus Weizen, Gerste, Roggen, Mais oder einer Mischung davon umfasst.

13. Verwendung des Emulsionsprodukts nach einem der Ansprüche 1 bis 9 zum Bestreichen von Brot.

## Revendications

1. Produit sous forme d'émulsion à phase huileuse continue, étalable et comestible, laquelle émulsion comprend 20% à 85% en poids de graisse ou d'huile, 15% à 80% en poids d'eau, la quantité d'eau et de graisse et d'huile étant ensemble d'au moins 75% en poids, lequel produit en émulsion comprend en outre 0,5% à 7,5% en poids d'extrait de fruit de mûrier blanc.

2. Produit sous forme d'émulsion selon la revendication 1, lequel produit sous forme d'émulsion selon la présente invention comprend un extrait de fruit de mûrier blanc en une quantité allant de 0,8% à 6% en poids par rapport au produit en émulsion dans son ensemble.

3. Produit sous forme d'émulsion selon la revendication 1 ou 2, lequel produit sous forme d'émulsion selon la présente invention comprend un extrait de fruit de mûrier blanc en une quantité allant de 1% à 5% en poids par rapport au produit en émulsion dans son ensemble.

4. Produit sous forme d'émulsion selon l'une quelconque des revendications 1 à 3, dans lequel l'extrait de fruit de mûrier blanc est un extrait aqueux séché de fruit de mûrier blanc, de préférence un extrait aqueux séché de fruit de mûrier blanc séché.

5. Produit sous forme d'émulsion selon l'une quelconque des revendications précédentes, dans lequel l'extrait de fruit de mûrier blanc est un extrait hydrosoluble de fruit de mûrier blanc.

6. Produit sous forme d'émulsion selon l'une quelconque des revendications précédentes, dans lequel l'étalement a une valeur de Stevens comprise entre 50 et 350.

7. Produit sous forme d'émulsion selon l'une quelconque des revendications précédentes, lequel produit sous forme d'émulsion comprend de 30% à 85% en poids de graisse ou d'huile et de 15% à 70% en poids d'eau, plus préférablement de 35% à 55% en poids de graisse ou d'huile et de 45% à 65% d'eau.

8. Produit sous forme d'émulsion selon l'une quelconque des revendications précédentes, qui comprend en outre de 0,1% à 1,5% en poids de sel.

9. Produit sous forme d'émulsion selon l'une quelconque des revendications précédentes, qui comprend en outre un émulsifiant de monoacylglycéride et/ou de la lécithine.

10. Procédé pour préparer une tranche comestible de pain ou un petit pain comestible, lequel procédé comprend l'étape consistant à étaler sur une tranche de pain ou un petit pain de 2g à 50 g du produit sous forme d'émulsion selon l'une quelconque des revendications 1 à 9.

11. Procédé selon la revendication 10, dans lequel la tranche de pain ou le petit pain est constitué de farine comprenant au moins 50% (en poids par rapport à la quantité totale de farine) de farine de grains entiers.

12. Procédé selon la revendication 10 ou 11, dans lequel la tranche de pain ou le petit pain est constitué d'une farine comprenant au moins 50% de farine de blé, d'orge, de seigle, de maïs ou d'un mélange de ceux-ci.

13. Utilisation du produit sous forme d'émulsion selon l'une quelconque des revendications 1 à 9, à tartiner sur du pain.
